# EUROPÄISCHE PATENTSCHRIFT

(11) **EP 0 807 354 B1**
(45) Veröffentlichungstag und Bekanntmachung des Hinweises auf die Patenterteilung: **21.04.1999**
(21) Anmeldenummer: 96900251.8
(22) Anmeldetag: 05.01.1996
(51) Int. Cl.: H04N 7/088, H04N 7/035

(54) **VERFAHREN UND SCHALTUNGSANORDNUNG ZUR GEWINNUNG VON IN EINEM VIDEOSIGNAL ENTHALTENER DIGITALER DATENINFORMATION**
PROCESS AND CIRCUITRY FOR ACQUIRING DIGITAL DATA CONTAINED IN A VIDEO SIGNAL
PROCEDE ET CIRCUIT POUR L'OBTENTION DE DONNEES NUMERIQUES CONTENUES DANS UN SIGNAL VIDEO

(30) Priorität: 02.02.1995 DE 19503409
(43) Veröffentlichungstag der Anmeldung: 19.11.1997
(73) Patentinhaber: SIEMENS AKTIENGESELLSCHAFT, 80333 München (DE)
(72) Erfinder: ENGLERT, Ulrich, D-81549 München (DE)
(86) Internationale Anmeldenummer: DE9600010
(87) Internationale Veröffentlichungsnummer: WO9624221

(56) Entgegenhaltungen:
- US-A- 4 658 294
- IEEE TRANSACTIONS ON BROADCASTING, Bd. 36, Nr. 4, 1.Dezember 1990, Seiten 299-304, XP000179354 AIICHIRO TSUZUKU: "MOBILE TELETEXT RECEPTION USING SIGNAL PROCESSING IN FREQUENCY DOMAIN"

## Beschreibung

Die Erfindung betrifft ein Verfahren zur Gewinnung von in einem Videosignal enthaltener digitaler Dateninformation nach dem Oberbegriff des Patentanspruchs 1. Die Erfindung betrifft außerdem eine Schaltungsanordnung zur Gewinnung von in einem Videosignal enthaltener digitaler Dateninformation.

Bekanntlich werden digitale Daten in einem Fernsehsignal als sogenannter Teletextdienst übertragen. Die Teletextdaten sind üblicherweise in der Vertikalaustastlücke des Fernsehsignals, in der keine herkömmliche Bildinformation übertragen wird, enthalten. Zur Abtrennung der Teletextdaten aus dem empfangenen Fernsehsignal weisen Teletextverarbeitungseinrichtungen entsprechende Schaltungsanordnungen, sogenannte Daten-Slicer auf.

In der europäischen Patentanmeldung EP 0 536 661 ist eine Daten-Slicer-Schaltung beschrieben, bei der ein erster Phasenregelkreis zur Synchronisation auf den Horizontal-Synchronanteil des Videosignals und ein zweiter Phasenregelkreis zur Synchronisation auf den Takt der digitalen Daten vorgesehen sind. In der europäischen Patentanmeldung EP 0 536 659 ist eine Schaltungsanordnung zur Wiedergewinnung der digitalen Daten aus dem Videosignal angegeben, die ein Tiefpaß- und ein Bandpaßfilter enthält. Durch Vergleich des Ausgangssignale der beiden Filter wird die digitale Dateninformation wiedergewonnen. In der US-Patentschrift 4 115 811 ist ein Daten-Slicer beschrieben, bei dem mittels eines Tiefpaßfilters ein Abtrennpegel ermittelt wird. Durch Vergleich des Videosignals mit diesem Abtrennpegel wird die digitale Dateninformation aus dem Videosignal wiedergewonnen.

Bei den bekannten Daten-Slicern verarbeiten die jeweiligen Filter das Videosignal in Echtzeit. Zum Einschwingen der Filter steht nur ein relativ kurzer Zeitabschnitt zur Verfügung. Beispielsweise sollte der Abtrennpegel bereits nach dem Takteinlauf einer übertragenen Teletextzeile, der nur einen Bruchteil einer Videozeile lang dauert, vorliegen, damit die nachfolgend übertragenen Reihen- und Magazinadressen sowie die darzustellenden Daten sicher erkannt werden. Dies erfordert Filter mit kurzer Einschwingzeit, deren Herstellung aufwendig ist. Ebenso ist die Realisierung der Phasenregelkreise, die zur Synchronisation auf den Horizontalsynchronanteil und den Datentakt notwendig sind, aufwendig. Bei analoger Realisierung der Phasenregelkreise und Filter sind Schwankungen ihrer Parameter, die durch die Herstellungstechnologie bedingt sind, zu berücksichtigen. Alternative integrierte digitale Realisierungen benötigen relativ viel Siliziumfläche. Darüber hinaus erfordert eine Anpassung auf andere Datenraten oder Datenformate eine vollständige Überarbeitung der Schaltungskomponenten.

In der Literaturstelle IEEE Transactions on Broadcasting, Band 36, Nr. 4, 1990, Aiichiro Tsuzuku: "Mobile Teletext Reception Using Signal Processing in Frequency Domain", Seiten 229 bis 304, ist ein experimentelles System zum Empfang eines Videosignals mit Teletextdaten in der Vertikalaustastlücke beschrieben. Das empfangene Videosignal wird in Quadratursignalkomponenten aufgetrennt, analog-digital-gewandelt und in einem Speicher zwischengespeichert. Unter Verwendung von Meßdaten werden Effekte der Mehrwegeausbreitung durch geeignete Filterung des Videosignals korrigiert. Anhand von dargestellten Augendiagrammen wird die Verbesserung gezeigt.

In der US 4 658 294 ist eine Anordnung zum Empfang eines Teletextsignals beschrieben, bei der die digitalen Teletextdaten vom Videosignal abgetrennt und anschließend in einem Pufferspeicher für ein Bild zwischengespeichert werden.

Die Aufgabe der Erfindung besteht darin, ein Verfahren und eine Schaltungsanordnung zur Gewinnung von in einem Videosignal enthaltener digitale Dateninformation anzugeben, deren Realisierung einfach ist und die Verwendung standardgemäßer Elemente ermöglicht.

Erfindungsgemäß wird diese Aufgabe durch ein Verfahren mit den Merkmalen des Patentanspruchs 1 gelöst.

Eine Schaltungsanordnung ist in Patentanspruch 6 angegeben.

Nach dem erfindungsgemäßen Verfahren werden die die Teletextdaten enthaltenden Zeilen eines Videosignals zuerst in einem Speicher zwischengespeichert. Die Zwischenspeicherung erfolgt ohne jegliche Dekodierung der im Videosignal enthaltenen digitalen Daten. Das empfangene Signal wird lediglich analog/digital gewandelt, und die dadurch erhaltenen digitalen Abtastwerte für das Videosignal werden dann im wesentlichen unverändert zwischengespeichert. Während der übrigen Empfangszeit des Fernsehbildes, in der im wesentlichen die nicht zur Vertikalaustastlücke gehörenden, am Bildschirm darstellbaren Zeilen eines Fernsehbildes empfangen werden, kann die Auswertung des gespeicherten Teils des Videosignals in bezug auf die darin enthaltene digitale Dateninformation durchgeführt werden. Bei der Auswertung wird der im digitalisierten Videosignal enthaltene Datenstrom ermittelt. Als digitale Dateninformation kommen sämtliche digitale Daten, z. B. Teletextdaten nach einem Teletextstandard (Videotext), Videoprogramminformation (VPS) oder Gehörlosen-Untertitel (Closed Caption) in Frage. Die Empfangszeit für die darstellbaren Zeilen ist wesentlich länger als diejenige Zeit, die zum Empfang der digitalen Daten zur Verfügung steht. Während der ersteren Zeitspanne kann unter wesentlich entspannteren Zeitanforderungen die Abtrennung der Daten aus dem Videosignal, z. B. durch Ermittlung eines Abtrennpegels und Vergleich des Videosignals mit diesem Abtrennpegel durchgeführt werden. Da das Videosignal zwischengespeichert wird, kann mehrfach darauf zugegriffen werden und eine Korrektur oder Nachführung der Abtrennungparameter, z. B. des Abtrennpegels durchgeführt werden, wenn bei der Auswertung der digitalen Dateninformation festgestellt werden sollte, daß Abtrennungsfehler vorliegen. Gegebenenfalls kann auch eine geeignete Rauschbearbeitung auf das Videosignal angewandt werden.

Zur Realisierung des Verfahrens und der Schaltungsanordnung sind ein Analog/Digital-Wandler vorgesehen, der ohnehin in heute üblichen Teletextverarbeitungseinrichtungen vorgesehen ist. Außerdem sind ein RAM-Speicher sowie ein Mikroprozessorkern, durch den die Verarbeitung des im Speicher enthaltenen Videosignals durchgeführt wird, vorgesehen. Da nach dem erfindungsgemäßen Verfahren bzw. der Schaltungsanordnung zur Abtrennung der Daten eine wesentlich längere Zeitspanne zur Verfügung steht, können die notwendigen Berechnungen ohne weiteres durch eine standardgemäße Mikroprozessoreinrichtung durchgeführt werden.

Die Datenabtrennung, z. B. durch Berechnung des Abtrennpegels durch die erfindungsgemäße Schaltungsanordnung ist unabhängig von der Herstellungstechnologie, da Filterkonstanten nicht wie im Stand der Technik durch entsprechende Bauelementeparameter, sondern softwaremäßig festgelegt werden. Eine Anpassung an länderspezifische Datenraten, Datenformate und Zeilenfrequenzen können durch einfache Änderungen in der Software berücksichtigt werden. Es entfallen die jeweiligen Phasenregelkreise zur Synchronisation auf den Horizontalsynchronimpuls und den Datentakt, da dies nunmehr softwaregesteuert, beispielsweise durch den Vergleich von Schwellwerten mit dem Videosignal durchgeführt wird. Bei integrierter Realisierung weist die erfindungsgemäße Schaltungsanordnung eine regelmäßige Struktur auf. Sie ist demnach leicht testbar und die einzelnen Bauelemente können dicht gepackt und im Flächenverbrauch optimiert werden.

Vorteilhafte Weiterbildungen der Erfindung sind in den Unteransprüche angegeben. Es ist zweckmäßig, ein Fenstersignal zu erzeugen, durch das angegeben wird, in welchem Teilabschnitt einer Zeile die digitalen Daten enthalten sind. Hierzu werden der im Videosignal enthaltene Horizontalsynchronimpuls sowie der Farbträger ausgeblendet. Dadurch wird Speicherplatz gespart. Um einerseits diejenigen Zeilen, die die digitale Dateninformation enthalten, zu ermitteln und andererseits das Fenstersignal zu erzeugen, ist es notwendig, den Horizontalsynchronimpuls auszuwerten. Hierzu wird während der Initialisierungsphase der Wertebereich für die Synchronabtrennschwelle wiederholt durchfahren, bis eine geeignete Synchron; abtrennschwelle für ein sicheres Abtrennen des Synchronimpulses vorliegt. Die Ermittlung des Abtrennpegels für die digitalen Daten kann durch Auswertung von gemäß dem Teletextstandard übertragenen Fehlerschutzbits solange nachgestellt werden, bis ein fehlerfreies Abtrennen erreicht wird. Außerdem kann der Takteinlauf einer Teletextzeile einer Tiefpaßfilterung unterzogen werden, um den Abtrennpegel zu ermitteln, wobei die Zeitkonstante des Tiefpaßfilters solange nachgestellt wird, bis der Abtrennpegel eine möglichst sichere Datenabtrennung ermöglicht. Die erfindungsgemäße Schaltungsanordnung ist für die wiederholte Anpassung der Synchron- und Datenabtrennschwelle besonders geeignet, da das im Speicher gespeicherte Videosignal mehrfach durch den Mikroprozessor aus dem Speicher ausgelesen und bearbeitet werden kann und die Filterfunktionen softwaremäßig im Mikroprozessor realisiert sind und somit in einfacher Weise geändert werden können.

Nachfolgend wird die Erfindung anhand der in der Zeichnung dargestellten Figuren detaillierter erläutert. Es zeigen:
- Figur 1: ein Prinzipschaltbild der Schaltungsanordnung und
- Figur 2: den Signalverlauf einer Zeile eines Teletextsignals.

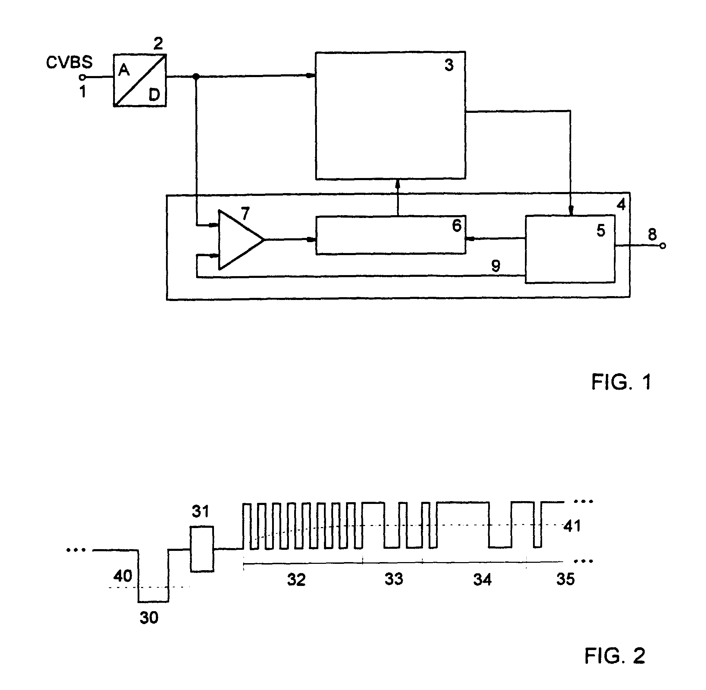

Der Anordnung nach Figur 1 wird an einem Anschluß 1 ein Fernsehsignal CVBS zugeführt. Das CVBS-Signal wird in einer Analog/Digital-Wandlereinrichtung 2 digital gewandelt und in einem flüchtigen RAM-Speicher 3 zwischengespeichert. Eine Steuerungseinrichtung 4 sorgt für die Zugriffssteuerung auf den Speicher 3 und die Auswertung des darin gespeicherten Videosignals zur Abtrennung der im Videosignal enthaltenen digitalen Daten. Hierzu enthält die Steuerungseinrichtung 4 einen Mikroprozessorkern 5, der die softwaregesteuerte Auswertung der aus dem Speicher 3 ausgelesenen Daten durchführt sowie den Datenfluß steuert. Eine Zugriffssteuereinrichtung 6 stellt an den Speicher 3 Adreßsignale und Lese/Schreibsignale für das Ein- und Auslesen am Speicher 3 zur Verfügung. Mittels eines Komparators 7 wird der Horizontalsynchronimpuls ermittelt und zur Adreßsteuerung verwendet. Am Ausgangsanschluß 8 der Steuerungseinrichtung 4 werden vom Mikroprozessor 5 die digitalen Daten ausgegeben.

Ein Videosignal, das digitale Dateninformation gemäß einem Teletextstandard enthält, weist gemäß Figur 2 einen Synchronimpuls 30 auf, der den Beginn einer neuen Bildzeile angibt. Nachfolgend wird eine Farbträgerreferenzschwingung 31 übertragen, der die Teletextdaten nachfolgen. Die Teletextzeile wird durch einen Takteinlauf 32 eingeleitet, der eine Anzahl von Taktschwingungen in Form einer alternierenden binären Datenbitfolge enthält. Ein Startcode 33 gibt den zeitrichtigen Beginn der auszuwertenden Daten an und ermöglicht die Synchronisation auf den Datentakt. Dann folgt die Magazin- und Reihenadresse 34 der Teletextzeile. Die Bits der Magazin- und Reihenadresse sind nach einem Hamming-Code codiert. Anschließend folgen digitale Daten 35, die am Bildschirm darzustellen sind, z. B. Textinformation oder Grafikzeichen. Die digitalen Daten umfassen einen Wert "0" und einen Wert "1", wobei ersterer durch einen höheren elektrischen Signalegel, letzterer durch einen niedrigeren elektrischen Signalpegel repräsentiert wird. Die Werte "0" und "1" werden durch das analoge Videosignal dargestellt. Im Gegensatz dazu wird bei der Digitalisierung im Analog-Digital-Wandler 2 nicht etwa diese Folge von Werten "0" und "1" zurückgewonnen, sondern es wird nur das bislang zeit- und wertekontinuierlich vorliegende analoge Videosignal in ein zeitdiskretes und wertediskrete Abtastwerte umfassendes digitales Videosignal umgewandelt. Die Abtastfrequenz muß verglichen mit der Frequenz der im Videosignal enthaltenen Werte "0" und "1" relativ hoch sein, so daß das Abtasttheorem erfüllt ist und diese Werte wieder aus dem digitalisierten Videosignal wiedergewonnen werden können.

Zweckmäßigerweise ist das Einlesen des digitalisierten CVBS-Signals in den Speicher 3 an den Horizontalsynchronanteil 30 des Videosignals CVBS zu koppeln. Während einer Initialisierungsphase wird eine Synchronschwelle 40 ermittelt, um den Synchronanteil im Videosignal sicher zu erkennen und vom Videosignal abzutrennen. Zur Ermittlung einer geeigneten Synchronschwelle wird eine Anzahl von Bildzeilen, die vorzugsweise auch den Bildwechsel umfaßt, im Speicher 3 gespeichert. Vom Mikroprozessor 5 wird ein anfänglicher Synchronabtrennwert vorgegeben und es werden die im Speicher 3 gespeicherten Daten ausgelesen und mit dem vorgegebenen Synchronabtrennwert verglichen. Wird während einer Zeitspanne, während der ein Synchronimpuls zu erwarten wäre, kein Synchronimpuls ermittelt, bedeutet dies, daß der vorgegebene Pegel für die Synchronabtrennschwelle ungeeignet ist. Er wird schrittweise solange verändert, wobei für jeden Schritt ein Vergleich mit dem in Speicher 3 gespeicherten Videosignal durchgeführt wird, bis der Synchronimpuls sicher feststellbar ist. Zur Plausibilitätsüberprüfung kann beispielsweise die Länge des Synchronimpulses 30 sowie der Abstand zweier aufeinanderfolgender ermittelter Synchronimpulse ausgewertet werden, so daß die Sicherheit der Synchronimpulsabtrennung erhöht wird. Die während der Initialisierungsphase derart ermittelte Synchronabtrennschwelle 40 wird über die Leitung 9 dem Komparator 7 als Referenzwert eingespeist.

Das ankommende CVBS-Signal wird an einem anderen Eingang des Komparators 7 eingespeist, so daß der Synchronimpuls abgetrennt wird. Durch Auswertung der Vor- und Nachtrabanten im Bereich des Bildwechsels kann der Bildanfang des Fernsehsignals festgestellt werden. Dies wird der Adreßsteuerungseinrichtung 6 mitgeteilt, in der entsprechende Zählereinrichtungen vorgesehen sind, die diejenigen Zeilen auswählen, in denen digitale Dateninformation, z. B. Teletextdaten gemäß einem Teletextstandard erwartet werden. Es wird angenommen, daß diese Teletextdaten nur während der Vertikalaustastlücke auftreten. Die derart ausgewählten Zeilen des Videosignals werden dann digitalisiert und im wesentlichen unverändert im Speicher 3 abgespeichert. Während der übrigen Zeit des Fernsehbildes, während der die an einem Bildschirm darstellbaren Bildzeilen empfangen werden, ist das Einspeichern in den Speicher 3 blockiert. Diese darstellbare Information enthaltenden Bildzeilen enthalten die Chrominanz und Luminanz für die Bildpunkte des Bildschirms als analoge Signalanteile. Während dieser Zeitspanne wird das im Speicher 3 zwischengespeicherte Videosignal durch den Mikroprozessor 5 zur Abtrennung der darin enthaltenen digitalen Daten ausgewertet. Für diese Auswertung steht ein Vielfaches derjenigen Zeitspanne zur Verfügung, während der die die Teletextdaten enthaltenden Bildzeilen empfangen wurden. Zur Abtrennung der Teletextdaten aus dem gespeicherten Videosignal können alle bisher in Echtzeit ausgeführten Abtrennungsverfahren verwendet werden, insbesondere auch die eingangs genannten. Diese Verfahren werden nunmehr softwaremäßig vom Mikroprozessor 5 abgearbeitet, was aufgrund der entspannten Zeitanforderung ohne weiteres möglich ist.

Eine bevorzugte Ausführung des Verfahrens zur Abtrennung der digitalen Dateninformation umfaßt die Bildung eines Abtrennpegels, wobei durch Vergleich des Videosignals mit dem Abtrennpegel die digitale Dateninformation gewonnen wird. Zur Ermittlung eines optimalen Abtrennpegels 41 wird von einem vorgegebenen Pegel, der beispielsweise von der Lage der Synchronschwelle 40 abgeleitet wird, ausgegangen. Dieser anfängliche Abtrennpegel wird auf einen bestimmten Datenanteil des Videosignals angewandt, z. B. denjenigen Anteil des Videosignals, der die Magazin- und Reihenadresse 34 enthält. Zum Auslesen aus dem Speicher 3 können diese Bereiche des Videosignals durch entsprechende Einstellung von Adreßzählern in der Zugriffssteuerung 6 ausgewählt werden, da diese Signalanteile des Videosignals einen festen Bezug zum Synchronimpuls 30 aufweisen und das Videosignal in Kopplung an den Synchronimpuls in den Speicher 3 eingelesen wurde. Die Reihen- und Magazinadresse 34 weist Fehlerschutzbits gemäß einem Hamming-Code auf. Sofern durch die Abtrennschwelle 41 unter Auswertung dieser Fehlerschutzbits die Reihen- und Magazinadresse nicht fehlerfrei erkannt wird, ist dies ein Hinweis darauf, daß der Abtrennpegel nicht optimal eingestellt ist. In einem weiteren Schritt kann mit einem veränderten Abtrennpegel wiederum der Bereich der Magazin- und Reihenadresse des Videosignals ausgewertet werden, um durch wiederholte Verbesserung des Abtrennpegels eine fehlerfreie Abtrennung dieser entsprechenden Daten zu erreichen.

Der Abtrennpegel kann auch ermittelt werden, indem eine Tiefpaßfilterung auf den Takteinlauf 32 ausgeführt wird. Durch wiederholtes Nachstellen der Zeitkonstante der durch den Mikroprozessor 5 ausgeführten Tiefpaßfilterung wird dafür gesorgt, daß das abgetrennte Signal möglichst ein ausgeglichenes Tastverhältnis aufweist, was praktisch bedeutet, daß der Abtrennpegel etwa in der Mitte des Amplitudenhubs der digitalen Daten liegt. Beide Varianten zur Ermittlung des Abtrennpegels können auch in Kombination angewandt werden. Mit dem ermittelten Abtrennpegel können die nachfolgenden Daten 34 einer Zeile ausgewertet werden. Diese stehen am Ausgangsanschluß 8 der Schaltungsanordnung zur Verfügung und werden in den herkömmlichen Schaltungseinheiten eines Teletextprozessors weiterverarbeitet. Der im Mikroprozessor 5 während einer Zeile ermitttelte Abtrennpegel wird vorzugsweise als Startwert für den Abtrennpegel einer weiteren Zeile verwendet, so daß eine vollständige Neueinstellung entfällt. Dadurch ist es möglich, daß auch niedrigfrequente Störsignale, z. B. ein von der Netzspannung herrührendes Brummstörsignal, ausgeregelt wird. Andererseits ist auch das in der EP 0 536 659 beschriebene Verfahren, bei dem das Videosignal durch ein Tiefpaß- und ein Bandpaßfilter gefiltert wird und anschließend in einer Auswerteeinrichtung in Abhängigkeit vom Vorzeichen des betragsgrößeren Filterausgangssignals das Datum "0" oder "1" festgelegt wird, zur Datenabtrennung anwendbar.

Es ist zweckmäßig, ein Fenstersignal zu erzeugen, durch das nur der die Dateninformation 32...35 enthaltende Teil des Videosignals im Speicher 3 zwischengespeichert wird. Der Synchronimpuls 30 und der Farbträgerimpuls 31 werden ausgeblendet. Dies kann durch entsprechende Zähler in der Zugriffssteuerungseinrichtung 6 oder einen Zeitgeber im Mikroprozessor 5, der einen auf die vom Komparator 7 gelieferte Synchronimpulsinformation bezogenes Zeitabstand bereitstellt, realisiert werden.

Die Synchronisierung auf den Horizontalsynchronimpuls und den Datentakt bei der Auswertung des im Speicher 3 gespeicherten Videosignals wird dadurch erreicht, daß das Videosignal mit der Synchronschwelle 40 bzw. der Abtrennschwelle 41 verglichen wird. Die im Stand der Technik üblichen Phasenregelkreise sind hierzu nicht mehr notwendig. Diese Schwellwerte und Abtrennpegel können nachgestellt werden, sofern während der Verarbeitung festgestellt wird, daß fehlerhafte Daten erhalten werden. Der Abtrennvorgang wird dann mit dem verbesserten Abtrennpegel/der verbesserten Synchronschwelle insgesamt oder in Teilen wiederholt. Dadurch kann auch eine dem Videosignal überlagerte langsame Schwingung, z. B. ein Netzspannungsbrummsignal berücksichtigt werden. Sofern Rauschen festgestellt wird, kann der Abtrennvorgang mit den im Speicher 3 gespeicherten Daten nach einer Rauschfilterung wiederholt werden.

Da die Filtermaßnahmen und die Datenflußsteuerung vom Mikroprozessor 5 softwaregesteuert ausgeführt werden, kann eine Anpassung auf länderspezifische Standards ohne weitere Hardwareänderung durchgeführt werden. Die Datenabtrennung ist insgesamt unabhängig von herstellungsbedingten Schwankungen der Parameter der Bauelemente.

## Patentansprüche

1. Verfahren zur Gewinnung von in einem Videosignal enthaltener digitaler Dateninformation, insbesondere von Teletextdaten, bei dem das Videosignal (CVBS) in Bildzeilen aufgeteilt ist und digitale Dateninformation (32...35) in einem Teil der zu einem Bild gehörenden Zeilen enthält und ein anderer Teil der Zeilen weitere. an einem Bildschirm darstellbare Bildinformation enthält, und bei dem das Videosignal (CVBS) zumindest des die digitale Dateninformation (32...35) enthaltenden Teils eines Bildes in einen Speicher (3) digitalisiert eingelesen wird,
**dadurch gekennzeichnet,** daß
nach dem Einlesen die digitale Dateninformation (32...35) aus dem im Speicher gespeicherten Videosignal mittels Vergleich des Videosignals mit einem Abtrennpegel (41) ermittelt wird und daß für ein weiteres Abtrennen der digitalen Dateninformation (32...35) der Abtrennpegel (41) wiederholt verbessert wird, in dem er ausgehend von einem ersten Wert abhängig von einem Qualitätskriterium, das ein Maß für die Erkennbarkeit der Dateninformation darstellt, auf einen zweiten Wert verändert wird.

2. Verfahren nach Anspruch 1,
**dadurch gekennzeichnet,** daß
das Videosignal (CVBS) außerhalb des die digitale Dateninformation enthaltenden Teils gespeichert wird, daß die Lage des Synchronanteils des Videosignals ermittelt wird und daß ein Fenstersignal erzeugt wird, durch daß der die Dateninformation enthaltende Teil der Bildzeilen festlegbar ist.

3. Verfahren nach Anspruch 2,
**dadurch gekennzeichnet,** daß
zur Ermittlung des Synchronanteils des Videosignals (CVBS) eine Synchronschwelle (40) ermittelt wird und durch Vergleich des im Speicher gespeicherten Videosignals mit der Synchronschwelle (40) der Synchronanteil gewonnen wird, daß zur Ermittlung der Synchronschwelle (40) ausgehend von einem vorgegebenen Pegelwert der Pegelwert solange verändert wird und jeweils zum Vergleich mit dem Videosignal verwendet wird, bis der Synchronanteil feststellbar ist, und daß dieser Pegelwert die Synchronschwelle (40) bildet.

4. Verfahren nach einem der Ansprüche 1 bis 3,
**dadurch gekennzeichnet,** daß
zur Ermittlung des Abtrennpegels (41) vom ersten Abtrennpegelwert ausgegangen wird, dann der momentan vorliegende Abtrennpegel auf einen solchen Abschnitt des gespeicherten Videosignals, der eine fehlerredundante Datenbitfolge (34) enthält, zur Datenabtrennung angewandt wird, und daß, falls die Datenbitfolge nicht fehlerfrei ermittelt wird, der Abtrennpegelwert schrittweise verändert und jeweils auf den Abschnitt des gespeicherten Videosignals angewandt wird, bis die Datenbitfolge fehlerfrei erkannt wird.

5. Verfahren nach einem der Ansprüche 1 bis 3,
**dadurch gekennzeichnet,** daß
die Dateninformation eine einleitende alternierende binäre Bitfolge (32) enthält, daß der Abtrennpegel durch eine Tiefpaßfilterung ermittelt wird und daß die Zeitkonstante des Tiefpaßfilters solange schrittweise verändert wird, bis das Tastverhältnis des abgetrennten digitalen Datensignals einen vorgegebenen Wert erreicht hat.

6. Schaltungsanordnung zur Gewinnung von in einem Videosignal enthaltener digitaler Dateninformation enthaltend:
- eine Speichereinrichtung (3), in die zumindest diejenigen Zeilen des digitalisierten Videosignals (CVBS), die die digitale Dateninformation enthalten, einlesbar sind,
- eine Steuerungseinrichtung (4), durch die nach der Speicherung der die digitale Dateninformation enthaltenden Zeilen des Videosignals in der Speichereinrichtung (3) aus dem gespeicherten Videosignal die digitale Dateninformation ermittelbar ist, wobei
- die Steuerungseinrichtung (4) Mittel enthält, durch die die digitale Dateninformation (32...35) aus dem im Speicher gespeicherten Videosignal mittels Vergleich des Videosignals mit einem Abtrennpegel (41) ermittelbar ist, und
- Mittel, durch die der Abtrennpegel (41) für ein weiteres Abtrennen der digitalen Dateninformation (32...35) wiederholt verbessert wird, in dem er ausgehend von einem ersten Wert in Abhängigkeit von einem Qualitätskriterium, das ein Maß für die Erkennbarkeit der Daten information darstellt, auf einen zweiten Wert verändert wird.

7. Schaltungsanordnung nach Anspruch 6,
**dadurch gekennzeichnet,** daß
die Steuerungseinrichtung (4) erste Mittel enthält, durch die das Einlesen der Daten nur in solchen die digitale Dateninformation enthaltenden Abschnitten der Zeilen des Videosignals durchführbar ist.

8. Schaltungsanordnung nach Anspruch 7,
**dadurch gekennzeichnet,** daß
die Steuerungseinrichtung (4) zweite Mittel enthält, durch die aus dem gespeicherten Videosignal eine Synchronschwelle (40) zur Abtrennung des Synchronsignalanteils (30) ermittelt wird, und daß aus dem Synchronanteil ein Fenstersignal abgeleitet wird, durch das die ersten Mittel steuerbar sind, um die Zeitabschnitte festzulegen.

9. Schaltungsanordnung nach einem der Ansprüche 6 bis 8,
**dadurch gekennzeichnet,** daß
die Steuerungseinrichtung (4) Mittel zur Filterung des gespeicherten Videosignals mit Tiefpaßcharakteristik enthält, durch die der Abtrennpegel (41) gebildet wird, und daß die Tiefpaßcharakteristik in Abhängigkeit vom Qualitätskriterium veränderbar ist.

## Claims

1. Method for acquiring digital data information contained in a video signal, in particular for acquiring teletext data, in which the video signal (CVBS) is divided into picture lines and contains digital data information (32...35) in a portion of the lines belonging to a picture and another portion of the lines contains further picture information which can be displayed on a screen, and in which the video signal (CVBS) at least of that portion of a picture which contains the digital data information (32...35) is read in digitized form into a memory (3),
characterized in that after the read-in operation, the digital data information (32...35) is determined from the video signal stored in the memory by comparison of the video signal with a separation level (41), and in that, for further separation of the digital data information (32...35), the separation level (41) is repeatedly improved by being changed, starting from a first value, to a second value, in a manner dependent on a quality criterion which represents a measure of the identifiability of the data information.

2. Method according to Claim 1,
characterized in that the video signal (CVBS) not encompassing that portion which contains the digital data information is stored, in that the position of the sync component of the video signal is determined, and in that a window signal is generated which can be used to define that portion of the picture lines which contains the data information.

3. Method according to Claim 2,
characterized in that in order to determine the sync component of the video signal (CVBS), a sync threshold (40) is determined and the sync component is obtained by comparison of the video signal stored in the memory with the sync threshold (40), in that in order to determine the sync threshold (40), the level value is changed, starting from a predetermined level value, and is used in each case for comparison with the video signal, until the sync component can be ascertained, and in that this level value forms the sync threshold (40).

4. Method according to one of Claims 1 to 3,
characterized in that in order to determine the separation level (41), the first separation level value is taken as a departure point and then the instantaneous separation level is applied to a section of the stored video signal which contains a data bit sequence (34) having error redundancy, for the purpose of data separation, and in that if the data bit sequence is not determined in a manner free from errors, the separation level value is changed in steps and applied in each case to the section of the stored video signal until the data bit sequence is identified in a manner free from errors.

5. Method according to one of Claims 1 to 3,
characterized in that the data information contains an introductory alternating binary bit sequence (32), in that the separation level is determined by low-pass filtering, and in that the time constant of the low-pass filter is changed in steps until the duty ratio of the separated digital data signal has reached a predetermined value.

6. Circuit arrangement for acquiring digital data information contained in a video signal, containing:
- a memory device (3), into which at least those lines of the digitized video signal (CVBS) which contain the digital data information can be read,
- a control device (4), by which, after the storage of those lines of the video signal which contain the digital data information in the memory device (3), the digital data information can be determined from the stored video signal,
- the control device (4) containing means which enable the digital data information (32...35) to be determined from the video signal stored in the memory by comparison of the video signal with a separation level (41), and
- means by which, for further separation of the digital data information (32...35), the separation level (41) is repeatedly improved by being changed, starting from a first value, to a second value, in dependence on a quality criterion which represents a measure of the identifiability of the data information.

7. Circuit arrangement according to Claim 6,
characterized in that the control device (4) contains first means, which enable the read-in of data to be carried out only in those sections of the lines of the video signal which contain the digital data information.

8. Circuit arrangement according to Claim 7,
characterized in that the control device (4) contains second means, which determine, from the stored video signal, a sync threshold (40) for the separation of the sync signal component (30), and in that a window signal is derived from the sync component, by which window signal the first means can be controlled in order to define the time intervals.

9. Circuit arrangement according to one of Claims 6 to 8,
characterized in that the control device (4) contains means for filtering the stored video signal with a low-pass filter characteristic, by which the separation level (41) is formed, and in that the low-pass filter characteristic can be changed in dependence on the quality criterion.

## Revendications

1. Procédé pour l'obtention de données numériques contenues dans un signal vidéo, en particulier de données de télétexte, dans lequel le signal vidéo (CVBS) est divisé en lignes d'image et contient des données numériques (32.. . 35) dans une partie des lignes appartenant à une image, une autre partie des lignes contenant d'autres données d'image susceptibles d'être représentées sur un écran, et dans lequel le signal vidéo (CVBS) au moins de la partie d'une image contenant les données numériques (32 . . . 35) est enregistré sous forme numérique dans une mémoire (3), caractérisé en ce qu'après l'enregistrement, les données numériques (32 . . . 35) sont déterminées à partir du signal vidéo enregistré en mémoire par comparaison du signal vidéo avec un niveau de séparation (41) et en ce qu'en vue d'une autre séparation des données numériques (32...35), le niveau de séparation (41) est amélioré à plusieurs reprises en le modifiant à partir d'une première valeur en une deuxième valeur, en fonction d'un critère de qualité qui représente une mesure de l'identifiabilité des données numériques.

2. Procédé selon la revendication 1, caractérisé en ce que le signal vidéo (CVBS) est enregistré en dehors de la partie contenant les données numériques, en ce que la position de la portion de synchronisation du signal vidéo est déterminée et en ce qu'un signal de fenêtre est généré permettant de définir la partie des lignes d'image, qui contient les données numériques.

3. Procédé selon la revendication 2, caractérisé en ce qu'un seuil de synchronisation (40) est déterminé pour déterminer la portion de synchronisation du signal vidéo (CVBS) et en ce que la portion de synchronisation est obtenue par comparaison du signal vidéo enregistré en mémoire avec le seuil de synchronisation (40), en ce que pour déterminer le seuil de synchronisation (40) à partir d'une valeur de niveau donnée, la valeur de niveau est modifiée et à chaque fois utilisée pour la comparaison avec le signal vidéo, jusqu'à ce que la portion de synchronisation soit définissable, et en ce que cette valeur de niveau forme le seuil de synchronisation (40).

4. Procédé selon l'une des revendications 1 à 3, caractérisé en ce qu'on part de la première valeur du niveau de séparation pour déterminer le niveau de séparation (41), en ce qu'on applique ensuite le niveau de séparation instantané à une portion du signal vidéo enregistré contenant une suite de bits de données (34) à redondance de contrôle d'erreurs pour séparer les données et en ce que, si la suite de bits de données n'est pas déterminée sans erreurs, on modifie progressivement la valeur du niveau de séparation et on l'applique à chaque fois à la portion du signal vidéo enregistré jusqu'à ce que la suite de bits de données soit identifiée sans erreurs.

5. Procédé selon l'une des revendications 1 à 3, caractérisé en ce que les données numériques contiennent une suite de bits (32) binaire alternante initiale, en ce que le niveau de séparation est déterminé par un filtrage passe-bas et en ce que la constante de temps du filtre passe-bas est modifiée progressivement jusqu'à ce que le taux d'impulsions du signal de données numérique séparé ait atteint une valeur prédéfinie.

6. Circuit pour l'obtention de données numériques contenues dans un signal vidéo, comprenant :
- une mémoire (3) dans laquelle peuvent être enregistrées au moins celles des lignes du signal vidéo (CVBS) numérisé, qui contiennent les données numériques,
- un dispositif de commande (4) qui après avoir enregistré dans la mémoire (3) les lignes du signal vidéo contenant les données numériques, permet de déterminer les données numériques à partir du signal vidéo enregistré,
- le dispositif de commande (4) comportant des moyens permettant de déterminer les données numériques (32 . . . 35) à partir du signal vidéo enregistré en mémoire, par comparaison du signal vidéo avec un niveau de séparation (41), et
- des moyens permettant d'améliorer à plusieurs reprises le niveau de séparation (41) en vue d'une autre séparation des données numériques (32 . . . 35), en le modifiant à partir d'une première valeur en une seconde valeur, en fonction d'un critère de qualité qui représente une mesure de l'identifiabilité des données numériques.

7. Circuit selon la revendication 6, caractérisé en ce que le dispositif de commande (4) comporte des premiers moyens permettant de réaliser l'enregistrement des données uniquement dans les parties des lignes du signal vidéo, qui contiennent les données numériques.

8. Circuit selon la revendication 7, caractérisé en ce que le dispositif de commande (4) comporte des deuxièmes moyens permettant de déterminer un seuil de synchronisation (40) à partir du signal vidéo enregistré pour séparer la portion de signal de synchronisation (30) et en ce qu'un signal de fenêtre est déduit de la portion de synchronisation, permettant de commander les premiers moyens afin de définir les intervalles de temps.

9. Circuit selon l'une des revendications 6 à 8, caractérisé en ce que le dispositif de commande (4) comporte des moyens de filtrage du signal vidéo enregistré à caractéristique passe-bas, permettant de former le niveau de séparation (41), et en ce que la caractéristique passe-bas est variable en fonction du critère de qualité.
